# EUROPEAN PATENT SPECIFICATION

(11) **EP 2 150 021 B1**
(45) Date of publication and mention of the grant of the patent: **11.12.2013**
(21) Application number: 08300249.3
(22) Date of filing: 30.07.2008
(51) Int. Cl.: H04L 29/06, H04L 12/931

(54) **Network apparatus for a communication network and method for assembling it**
Netzwerkvorrichtung für ein Kommunikationsnetzwerk und Verfahren zur Anordnung davon
Appareil de réseau pour réseau de communications et procédé pour l'assembler

(43) Date of publication of application: 03.02.2010
(73) Proprietor: Alcatel Lucent, 75007 Paris (FR)
(72) Inventor: Barzhaghi, Giorgio, 20056, Grezzago (IT); Fumagalli, Aurelio, 23876, MONTICELLO BRIANZA (IT); Albini, Stefano, 20046, BIASSONO (IT); Coden, Diego, 20040, CARNATE (IT); Pagotto, Anna, 20040, CARNATE (IT)
(74) Representative: Shamsaei Far, Hassan

(56) References cited:
- WO-A-2005/013143
- US-A1- 2004 240 470

## Description

### Field of the invention

The present invention relates to the field of network apparatuses for communication networks. In particular, the present invention relates to a network apparatus for a communication network, including components produced by different manufacturers. Moreover, the present invention relates to a method for assembling a network apparatus.

### Background art

As it is known, a network apparatus for a communication network typically comprises a rack having a plurality of slots which are suitable for housing electronic boards, each electronic board supporting one or more components performing a given task. Exemplary components are routers, cross-connectors and multiplexers, which may be implemented e.g. in the form of ASICs or FPGAs.

Typically, one of the boards supports a controller, which is configured for performing management operations upon the other components. Exemplary management operations are: configuration of the components, performance monitoring of the components and monitoring of possible alarms generated by the components.

One or more back-plane connections are typically provided within the network apparatus. Such back-plane connections connect components residing on different boards, allowing them to exchange user traffic. Moreover, the back-plane connections connect the controller to the components, allowing them to exchange management information.

In order to communicate with the other components and with the controller, each component is typically provided with an interface, whose features are defined by the component's manufacturer.

In particular, the interface of a component typically has a layered logical structure, such as for instance the layered logical structure described by the OSI model (Open Systems Interconnection basic reference model). According to the OSI model, the various functionalities of an interface are grouped in seven layers, namely (starting from the upper layer): application layer, presentation layer, session layer, transport layer, network layer, data link layer and physical layer.

In particular, the physical layer is suitable for performing one or more of the following functionalities: bit-by-bit transmission, definition of physical features of the transmission medium (type of connectors, type of cable, cable length, electrical characteristics of cables, and so on), definition of signal's features (power, bandwidth, bit rate), modulation, in-line coding, bit synchronization, bit error correction, etc.

On the other hand, the data link layer is suitable for performing a point-to-point transfer of data. To this purpose, the data link layer provides a MAC function (Media Access Control), which manages the authorizations to access a physical medium by using suitable source and destination addresses.

Typically, the interface of a component is structured according to the application layer, data link layer and physical layer, while the intermediate layers of the OSI model are omitted.

Therefore, a manufacturer producing a component, for each of the three above layers, decides a respective protocol according to which the interface performs the functionalities of that layer. In particular, the manufacturer decides an application layer protocol, a data link layer protocol and a physical layer protocol, according to which the interface performs the functionalities of the application layer, data link layer and physical layer, respectively. Exemplary application layer protocols are: RTP (Real-time Transport Protocol) and SNMP (Simple Network Management Protocol). Exemplary data link layer protocols are: ATM (Asynchronous Transfer mode), PPP (Point-to-Point Protocol), HDLC (High-Level Data Link Control), and ADCCP (Advanced Data Communication Control Protocol). Besides, exemplary physical layer protocols are: SONET, SDH, G.709. The Ethernet protocol is both a data link layer protocol and a physical layer protocol.

US 2004/240470 discloses a technology for directing data through a network switch. One version of a network switch employs a mid-plane architecture that allows data to be directed between any link interface and any processing engine. Each time slot of data from an ingress link interface can be separately directed to any ingress processing engine. Each time slot of data from an egress processing engine can be separately directed to any egress link interface that supports the lower level protocol for the data. In one version of the switch, each processing engine in the network switch has the ability to service all of the protocols from the layers of the OSI model that are supported by the switch and not handled on the link interfaces. This allows the switch to allocate processing engine resources, regardless of the protocols employed in the data passing through the switch.

### Summary of the invention

A network apparatus may comprise components from different manufacturers, i.e. components whose interfaces may have different features. In particular, interfaces of components provided by different manufacturers may be based on different application layer protocols, data link layer protocols and physical layer protocols.

This disadvantageously requires providing the controller with a number of interfaces, each interface being based on a given application layer protocol, data link layer protocol and physical layer protocol, and being connected by means of a back-plane connection to the components based on the same application layer protocol, data link layer protocol and physical layer protocol.

This requires a high number of back-plane connections, each back-plane connection being suitable to connect an interface of the controller to a respective group of components whose interfaces are based on a same application layer protocol, data link layer protocol and physical layer protocol.

However, a high number of back-plane connections disadvantageously increases the complexity of the network apparatus' architecture and, on the other hand, increases the complexity of the operations of designing, assembling and testing the network apparatus.

Accordingly, an object of the present invention is providing a network apparatus for a communication network, which comprises a controller and a plurality of components and which has a reduced number of back-plane connections, even when such a plurality of components have interfaces based on different application layer protocols, data link layer protocols and physical layer protocols. This would advantageously simplify both the architecture of the network apparatus and the operations of designing, developing, assembling and testing the apparatus.

According to a first aspect, the present invention provides a network apparatus for a communication network, the network apparatus comprising:
a) a plurality of boards, the plurality of boards comprising a board having a component adapted to process traffic incoming at the network apparatus;
b) a further board having a controller adapted to perform management operations upon the component; and
c) a bus adapted to connect the plurality of boards and the further board, the bus being adapted to transport, according to a first physical layer protocol and to a first data link layer protocol, management information exchanged between the controller and the component,
wherein the component is adapted to process the management information according to a second physical layer protocol and to a second data link layer protocol; and wherein the network apparatus further comprises an adapter installed on the board, the adapter being adapted to perform adaptation between the first physical layer protocol and the second physical layer protocol, wherein performing adaptation comprises: processing the management information at a physical layer according to the first physical layer protocol and according to the second physical layer protocol; processing the management information at a data link layer according to the first data link layer protocol and according to the second data link layer protocol; and by translating the management information formatted according to any of the first data link layer protocol and the second data link layer protocol into management information formatted according to a first convergence layer protocol and vice versa, wherein the first convergence layer protocol is adapted to implement a set of functionalities of a convergence layer intermediate between the data link layer and an application layer.

Preferably, the component is adapted to process the management information according to a first application layer protocol; the controller is adapted to process the management information according to the first application layer protocol; the controller is further adapted to translate the management information formatted according to the first application layer protocol into management information formatted according to a second convergence layer protocol and vice versa.

Profitably, the controller is adapted to activate a communication channel towards the adapter according to a master-slave mechanism, the controller being adapted to play a master role.

Preferably, the controller is adapted to process the management information according to a third physical layer protocol; and the network apparatus further comprises a further adapter installed on the further board, the further adapter being adapted to perform adaptation between the first physical layer protocol and the third physical layer protocol.

Preferably, the further adapter is adapted to activate a communication channel towards the adapter according to a master-slave mechanism, the further adapter being adapted to play a master role.

Profitably, the adapter is further adapted to use the communication channel for communicating with the controller according to a master-slave mechanism.

According to a second aspect, the present invention provides a method for assembling a network apparatus for a communication network, the method comprising:
a) providing a plurality of boards, said plurality of boards comprising a board having a component adapted to process traffic incoming at the network apparatus;
b) providing a further board having a controller adapted to perform management operations upon the component;
c) providing a bus adapted to connect the plurality of boards and the further board, the bus being adapted to transport, according to a first physical layer protocol and to a first data link layer protocol, management information exchanged between the controller and the component; and
d) providing an adapter on the board, the adapter being adapted to perform adaptation between the first physical layer protocol and a second physical layer protocol according to which the component is adapted to processing the management information, wherein said performing adaptation comprises:
   d1) processing the management information at a physical layer according to the first physical layer protocol and according to the second physical layer protocol;
   d2) processing the management information at a data link layer according to the first data link layer protocol and according to a second data link layer protocol according to which the component is adapted to process the management information; and
   d3) translating the management information formatted according to any of the first data link layer protocol and the second data link layer protocol into management information formatted according to a first convergence layer protocol and vice versa, wherein the first convergence layer protocol is adapted to implement a set of functionalities of a convergence layer intermediate between the data link layer and an application layer.

### Brief description of the drawings

The present invention will be better understood by reading the following detailed description, given by way of example and not of limitation, to be read by referring to the accompanying drawings, wherein:
- Figure 1 schematically shows the architecture of a network apparatus according to a first embodiment of the present invention;
- Figure 2 shows in further detail the structure of an adapter shown in Figure 1; and
- Figure 3 schematically shows the architecture of a network apparatus according to a second embodiment of the present invention.

### Detailed description of preferred embodiments of the invention

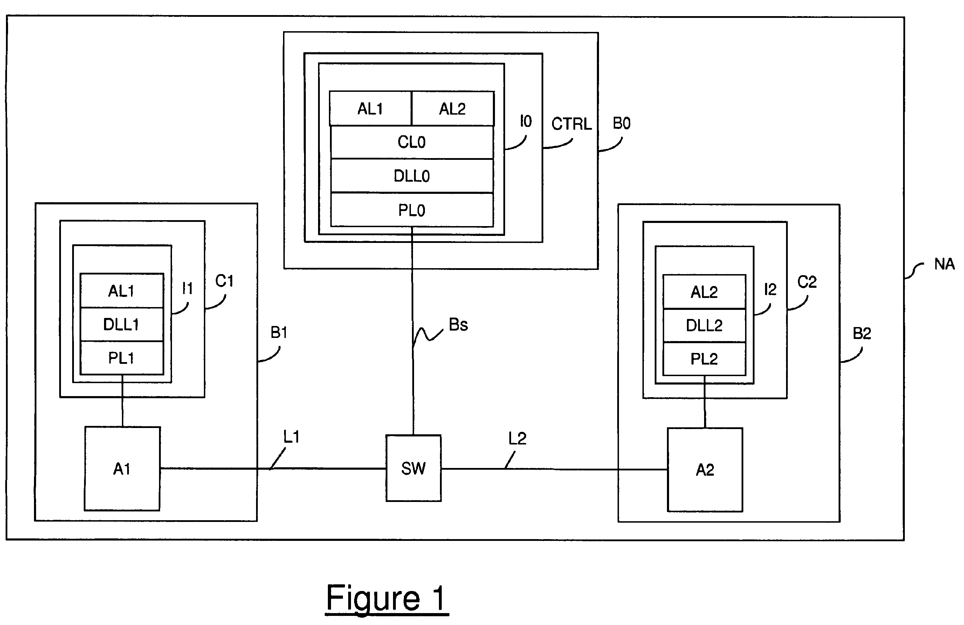

Figure 1 schematically shows the architecture of a network apparatus NA according to a first embodiment of the present invention.

The network apparatus NA preferably comprises a plurality of boards which, as mentioned above, are preferably arranged in suitable slots of a rack. For simplicity, it is assumed that the network apparatus NA of Figure 1 merely comprises three boards B0, B1 and B2.

In particular, the network apparatus NA comprises a controller CTRL, which is preferably installed on the board B0. Further, the network apparatus NA comprises a plurality of components, which are distributed on the boards B1 and B2. More particularly, a component C1 is installed on the board B1, while a component C2 is installed on the board B2. For clarity, the other components installed on the boards B1 and B2 are not shown in Figure 1.

Each component C1, C2 has a respective interface I1, I2 which, as mentioned above, is configured for allowing the component C1, C2 to communicate with the controller CTRL and with other components of the network apparatus. Preferably, each interface I1, I2 has a layered logical structure, which may be based e.g. upon the above mentioned OSI model.

In particular, each interface I1, I2 is configured for performing the functionalities of the application layer according to an application layer protocol AL1, AL2, for performing the functionalities of the data link layer according to a data link layer protocol DLL1, DLL2 and for performing the functionalities of the physical layer according to a physical layer protocol PL1, PL2, respectively.

Moreover, the controller CTRL has an interface I0 which is configured for allowing the controller CTRL to communicate with the components C2, C1. Preferably, also the interface I0 has a layered logical structure, which may be based e.g. upon the above mentioned OSI model.

According to the first embodiment of the present invention, the interface I0 is configured for performing the functionalities of the application layer according to the application layer protocol AL1 of the interface I1 and also according to the application layer protocol AL2 of the interface I2. Besides, the interface I0 is configured for performing the functionalities of the data link layer according to a data link layer protocol DLL0, and for performing the functionalities of the physical layer according to a physical layer protocol PL0.

Further, preferably, the interface I0 of the controller CTRL is also suitable for implementing a layer which is intermediate between the data link layer and the application layer. In the following description and in the claims, this layer will be termed "convergence layer". Preferably, the convergence layer within the interface I0 comprises a set of functionalities which are implemented according to a convergence layer protocol CL0.

In particular, preferably, the set of functionalities of the convergence layer within the interface I0 is suitable for adapting the application layer protocols AL1 and AL2 to the convergence layer protocol CLO, i.e. for translating information formatted according to either the application layer protocol AL1 or the application layer protocol AL2 into information formatted according to the convergence layer protocol CL0 and *vice versa.*

Preferably, the network apparatus NA comprises a bus Bs and a switch SW, the interface I0 of the controller CTRL being connected to the switch SW by means of the bus Bs. Preferably, the bus Bs and the switch SW operate according to a same physical layer protocol, which in the following description will be indicated as PL-bus. Besides, preferably, the bus Bs and the switch SW operate according to a same data link layer protocol, which in the following description will be indicated as DLL-bus. For instance, the protocols PL-bus and DLL-bus may be Ethernet.

According to this first embodiment, the physical layer protocol PL0 of the interface I0 is the same as the physical layer protocol PL-bus, and the data link layer protocol DLL0 of the interface I0 is the same as the data link layer protocol DLL-bus.

Besides, the physical layer protocols PL1, PL2 of the interfaces I1, I2 are preferably different from the physical layer protocol PL-bus, and the data link layer protocols DLL1, DLL2 of the interfaces I1, I2 are different from the data link layer protocol DLL-bus.

Preferably, the network apparatus NA comprises, for each component C1, C2, a respective adapter A1, A2, by means of which the interface I1, I2 is connected to the switch SW. Preferably, the adapter A1 is installed on the first board B1 and is connected to the switch SW by means of a link L1. Similarly, the adapter A2 is preferably installed on the second board B2 and is connected to the switch SW by means of a link L2. Preferably, the links L1 and L2 operate according to the physical layer protocol PL-bus and the data link layer protocol DLL-bus.

Preferably, each adapter A1, A2 is configured for performing an adaptation function between the physical layer protocol PL1, PL2 of the interface I1, I2 and the physical layer protocol PL-bus, thus allowing the component C1, C2 to communicate with the controller CTRL and possibly with the other components of the network apparatus NA by using the bus Bs, the switch SW and the links L1, L2.

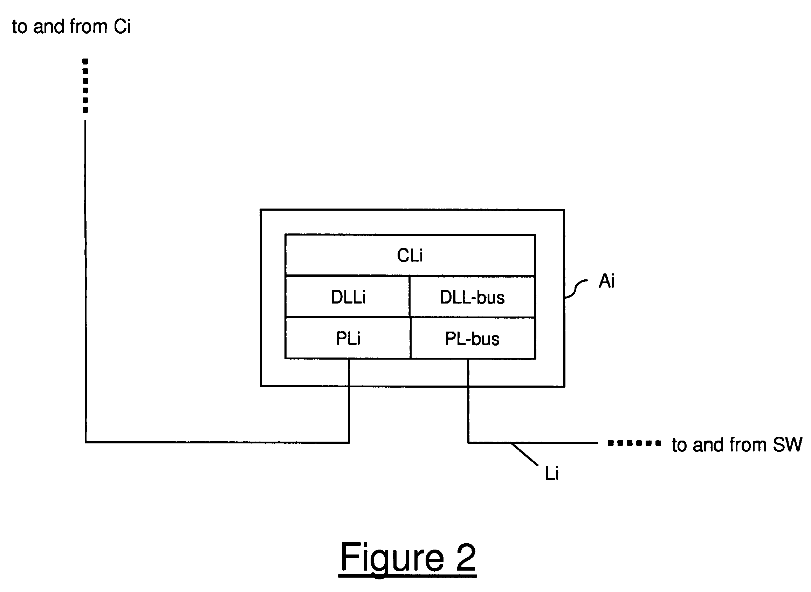

In particular, by referring to Figure 2, which shows in detail the structure of an adapter Ai (where "i" is an index which may be equal to 1 or 2), the adapter Ai is suitable for implementing data link layer functionalities according to the data link layer protocol DLLi of the interface li and also according to the data link layer protocol DLL-bus. Besides, the adapter Ai is suitable for implementing physical layer functionalities according to the physical layer protocol PLi of the interface li and also according to the physical layer protocol PL-bus.

Besides, preferably, the adapter Ai is also suitable for implementing a convergence layer which, as mentioned above, is a layer intermediate between the data link layer and the application layer. Preferably, the convergence layer within the adapter Ai comprises a set of functionalities which are implemented according to a convergence layer protocol CLi.

In particular, preferably, the set of functionalities of the convergence layer within the adapter Ai is suitable for adapting the data link layer protocols DLLi and DLL-bus to the convergence layer protocol CLi, i.e. for translating information formatted according to either the data link layer protocol DLLi or the data link layer protocol DLL-bus into information formatted according to the convergence layer protocol CLi and *vice versa.*

Therefore, when the controller CTRL has to transmit management information (such as, for instance, configuration parameters) to one of the components C1 and C2 (for instance, C1), it preferably transmits such management information by using its interface I0. In particular, the interface I0 processes the management information according to the application layer protocol AL1, and then translates them in management information formatted according to the convergence layer protocol CL0. Then, the interface I0 processes the management information according to the data link layer protocol DLL0 (which, as assumed above, is equal to DLL-bus) and physical layer protocol PL0 (which, as assumed above, is equal to PL-bus), and then transmits the management information through the bus Bs.

When the management information reach the switch SW, they are switched along the link L1 towards the first board B1, on which the component C1 and the adapter A1 are installed, as it will be described in detail herein after.

When the management information reach the adapter A1, the adapter A1 processes them according to the physical layer protocol PL-bus, and then according to the data link layer protocol DLL-bus. Then, it preferably translates them in management information formatted according to the convergence layer protocol CL1. Finally, it processes the management information according to the data link layer protocol DDL1 and the physical layer protocol PL1.

The management information formatted according to the physical layer protocol PL1 are then transmitted to the component C1, which receives them by means of its interface I1. Finally, the interface I1 processes the management information according to the functionalities defined by the physical layer protocol PL1, the data link layer protocol DLL1, and the application layer protocol AL1.

Even though the above example specifically refers to management information transmitted from the controller CTRL to the component C1 (or C2), the above description symmetrically applies also to management information transmitted from one of the components C1 and C2 to the controller CTRL. A detailed description therefore will not be repeated.

Therefore, advantageously, the network apparatus NA of Figure 1 has a very reduced number of back-plane connections, in comparison to known network apparatuses.

Indeed, as shown in Figure 1, the controller CTRL is advantageously provided with a single interface I0, which is able to support different application layer protocols on a same data link layer protocol and a same physical layer protocol, thanks to the insertion of a convergence layer between the data link layer and the application layer.

The controller CTRL is therefore advantageously capable of exchanging information formatted according to a single format, which may therefore be transmitted on a same back-plane connection, i.e. the bus Bs.

On the other hand, even though a component is equipped with an interface based on a data link layer protocol and a physical layer protocol which are different from the data link layer protocol and physical layer protocol of the interface I0 and the bus Bs, it may advantageously use the bus Bs for exchanging information with the controller CTRL.

Indeed, thanks to the adapter, which is inserted between the component and the bus Bs, an adaptation is performed between the format supported by the component at its physical layer and the format supported by the bus at its physical layer.

This advantageously allows the component and the controller CTRL to exchange information by means of the bus Bs, this information being formatted according to a format supported by the bus at its physical layer and also at its data link layer.

Therefore, advantageously, a single back-plane connection (i.e. the bus Bs) is required for connecting all the components to the single interface I0 of the controller CTRL, even though the components are equipped with interfaces based on different application layer protocols, data link layer protocols and physical layer protocols.

Advantageously, the bus Bs may be used also for transporting user traffic within the network apparatus NA. This advantageously allows to provide the network apparatus NA with a single bus which transports of all the data (management information, user traffic, etc.) that the various boards of the apparatus need to exchange.

Therefore, if, for instance, the bus Bs is an Ethernet bus and the switch SW is an Ethernet switch, the Ethernet bus may be the only back-plane connection required for connecting the board B0 of the controller CTRL to all the other boards of the network apparatus, provided that the controller CTRL implements the convergence layer protocol CL0 for making the various application layer protocols converge to a same convergence layer protocol and then to the Ethernet protocol, and provided that each of the other boards has a respective adapter for adapting Ethernet-formatted management information coming from the controller CTRL into a format compatible with the protocols supported by the component at its data link layer and physical layer.

This advantageously simplifies the architecture of the network apparatus, since the Ethernet bus is substantially the only back-plane connection which is required for connecting the boards of the network apparatus NA.

Accordingly, also the operations of designing, assembling and testing the apparatus are advantageously simplified.

Preferably, in case the interface I0 of the controller CTRL is based on Ethernet, the interface I0 is suitable for periodically repeating a "discovery" of possible new components connected to the bus Bs by means of a respective adapter.

In particular, the interface I0 preferably periodically transmits along the bus Bs a discovery message comprising its own MAC address. When a component (e.g. C1) is connected to the bus Bs by means of a respective adapter (i.e. A1) and a respective link (i.e. L1) and receives the discovery message for the first time, the adapter A1 preferably replies by transmitting an acknowledge message to the interface I0. Preferably, the adapter A1 inserts in the acknowledge message its own MAC address. Upon reception of the acknowledge message, the interface I0 preferably activates a communication channel towards the component C1, i.e. towards the adapter A1. To this purpose, the interface I0 preferably instructs the switch SW, which is preferably an Ethernet switch, to route along the link L1 any Ethernet packet having in its header the MAC address of the adapter A1.

Preferably, after the communication channel between the controller CTRL and the adapter A1 has been activated, such a communication channel may be used not only for allowing exchanges of information between the controller CTRL and the component C1, but also for allowing exchanges of information between the component C1 and other possible components of the network apparatus NA which have the same application layer protocol AL1.

Preferably, the exchanges of information between the component C1 and the controller CTRL and the exchanges of information between the component C1 and the other possible components of the network apparatus NA which have the same application layer protocol AL1 is based on a mechanism which depends on the type of application layer protocol AL1. In particular, such a mechanism may be either a master-slave mechanism or a peer-to-peer mechanism.

In the first embodiment shown in Figure 1, the data link layer protocol DLL0 and the physical layer protocol PL0 are equal to the data link layer protocol DLL-bus and the physical layer protocol PL-bus, respectively, and the interface I0 is able to support both the application layer protocols AL1 and AL2.

This situation may occur when the network provider, which physically assembles the network apparatus NA, develops also the controller CTRL. This means that the network provider may choose the features of the interface I0 and, in particular, the application protocols AL1, AL2, the data link layer protocol DLL0 and the physical layer protocol PL0 according to which the interface I0 operates. Further, the network provider may also implement the convergence layer within the interface I0, thus choosing the convergence layer protocol CL0. The various components are then adapted to the chosen protocols by using adapters similar to the one described above and shown in Figure 2.

However, is some cases the network provider does not develop the controller CTRL, but simply purchases it from a manufacturer. In this situation, the network provider can not choose the features of the interface I0. In particular, the network provider can not choose the application layer protocol(s), the data link layer protocol and the physical layer protocol according to which the interface I0 operates.

In this latter case, there may occur a situation in which the application layer protocol of the controller's interface is different from the application layer protocols of the other components. Besides, the data link layer protocol and the physical layer protocol according to which the interface I0 operates may be different from the data link layer protocol DLL-bus and the physical layer protocol PL-bus.

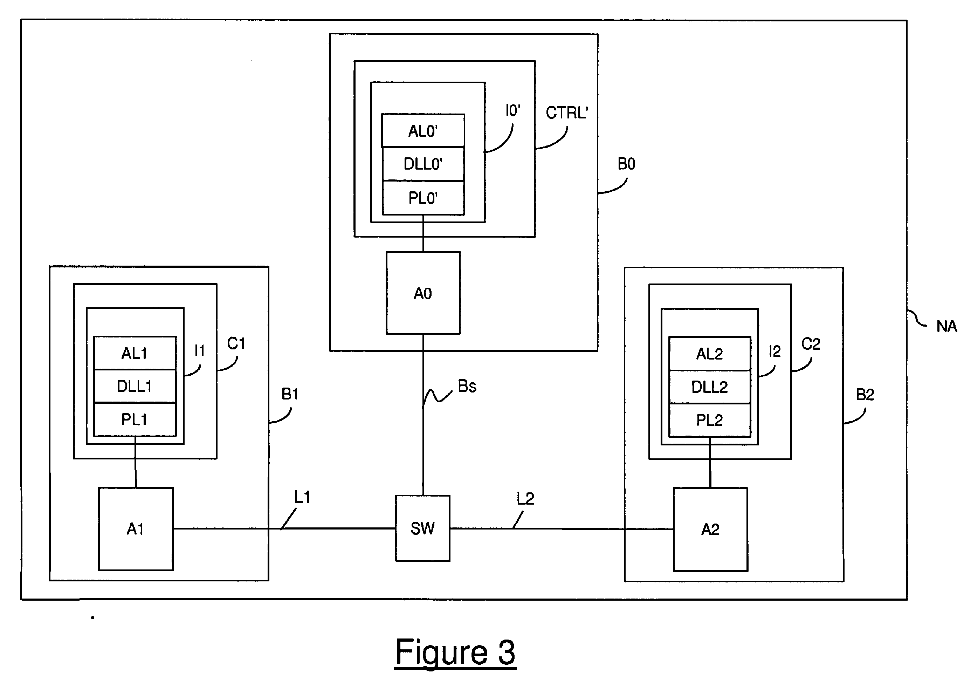

Figure 3 schematically shows the architecture of a network apparatus NA according to a second embodiment of the present invention, which comprises a controller CTRL' having an interface I0' based on a application layer protocol ALO', a data link layer protocol DLLO' and a physical layer protocol PL0'. In particular, the application layer protocol ALO' is different from the application layer protocols AL1 and AL2. Besides, the data link layer protocol DLL0' and the physical layer protocol PL0' are different from the data link layer protocol DLL-bus and the physical layer protocol PL-bus, respectively.

As shown in Figure 3, according to this second embodiment the network apparatus NA comprises a further adapter A0, by means of which the interface I0' is connected to the bus Bs. Preferably, the adapter A0 is installed on the board B0 and is connected to the switch SW by means of the bus Bs.

Preferably, the further adapter A0 is configured for performing an adaptation function between the physical layer protocol PL0' of the interface I0' and the physical layer protocol PL-bus.

The structure of the further adapter A0 is substantially similar to that of the adapter Ai shown in Figure 2. Accordingly, its description will be only briefly summarized herein after.

The further adapter A0 is suitable for implementing data link layer functionalities according to the data link layer protocol DLLO' of the interface I0' and according to the data link layer protocol DLL-bus. Besides, the adapter A0 is suitable for implementing physical layer functionalities according to the physical layer protocol PL0' of the interface I0' and according to the physical layer protocol PL-bus.

Besides, preferably, the further adapter A0 is also suitable for implementing a convergence layer which, as mentioned above, is a layer intermediate between the data link layer and the application layer. Preferably, the convergence layer within the further adapter A0 comprises a set of functionalities which are implemented according to a convergence layer protocol CLO'.

In particular, preferably, the set of functionalities of the convergence layer within the further adapter A0 is suitable for adapting the data link layer protocols DLLO' and DLL-bus to the convergence layer protocol CLO', i.e. for translating information formatted according to either the data link layer protocol DLLO' or the data link layer protocol DLL-bus into information formatted according to the convergence layer protocol CLO' and *vice versa.*

Therefore, according to this second embodiment, when the controller CTRL' has to transmit management information (such as, for instance, configuration parameters) to one of the components C1 and C2 (for instance, C1), it preferably transmits such management information by using its interface I0'. In particular, the interface I0' processes the management information according to the application layer protocol ALO', the data link layer protocol DLLO' and physical layer protocol PL0', and then transmits the management information to the further adapter A0.

When the management information reach the further adapter A0, the further adapter A0 processes them according to the physical layer protocol PL0' and according to the data link layer protocol DLLO', and then translates them into management information formatted according to the convergence layer protocol CLO'. Then, the further adapter A0 processes the management information according to the data link layer protocol DLL-bus and the physical layer protocol PL-bus. The management information are then transmitted to the switch SW through the bus Bs, and then to the component C1 through the link L1 and the adapter A1.

The operation of the adapter A1 is similar to that disclose above by referring to Figure 1. Accordingly, a detailed description will not be repeated.

Therefore, advantageously, also the network apparatus NA of Figure 3 has a very reduced number of back-plane connections, in comparison to known network apparatuses.

Indeed, even though the controller is equipped with interfaces based on a data link layer protocol and a physical layer protocol which are different from the data link layer protocol and physical layer protocol of the bus Bs, it may advantageously use the bus Bs for exchanging information.

Indeed, thanks to the further adapter A0 which is inserted between the controller and the bus Bs, an adaptation is performed between the format supported by the controller at its physical layer and the format supported by the bus at its physical layer.

This advantageously allows the controller CTRL to exchange information by means of the bus Bs, this information being formatted according to a format supported by the bus at its physical layer and also at its data link layer.

Also according to this second embodiment, in case the bus Bs and the switch SW are based on Ethernet, the adapter A0 is suitable for periodically repeating a "discovery" of possible new components connected to the bus Bs by means of respective adapters. Such a discovery is similar to that disclosed above, therefore a detailed description will not be repeated.

## Claims

1. A network apparatus (NA) for a communication network, the network apparatus (NA) comprising:
a) a plurality of boards, said plurality of boards comprising a board (B1) having a component (C1) adapted to process traffic incoming at said network apparatus (NA);
b) a further board (B0) having a controller (CRTL, CTRL') adapted to perform management operations upon said component (C1); and
c) a bus (Bs) adapted to connect said plurality of boards and said further board (BO), said bus (Bs) being adapted to transport, according to a first physical layer protocol (PL-bus) and to a first data link layer protocol (DLL-bus), management information exchanged between said controller (CTRL) and said component (C1),
**characterized in that** said component (C1) is adapted to process said management information according to a second physical layer protocol (PL1) and to a second data link layer protocol (DLL1); and
**in that** said network apparatus (NA) further comprises an adapter (A1) installed on said board (B1), said adapter (A1) being adapted to perform adaptation between said first physical layer protocol (PL-bus) and said second physical layer protocol (PL1), wherein said performing adaptation comprises:
d) processing said management information at a physical layer according to said first physical layer protocol (PL-bus) and according to said second physical layer protocol (PL1);
e) processing said management information at a data link layer according to said first data link layer protocol (DLL-bus) and according to said second data link layer protocol (DLL1); and
f) translating said management information formatted according to any of said first data link layer protocol (DLL-bus) and said second data link layer protocol (DLL1) into management information formatted according to a first convergence layer protocol (CL1) and *vice versa,* wherein said first convergence layer protocol (CL1) is adapted to implement a set of functionalities of a convergence layer intermediate between said data link layer and an application layer.

2. The network apparatus (NA) according to claim 1, wherein:
g) said component (C1) is adapted to process said management information according to a first application layer protocol (AL1);
h) said controller (CTRL) is adapted to process said management information according to said first application layer protocol (AL1);
i) said controller (CTRL) is further adapted to translate said management information formatted according to said first application layer protocol (AL1) into management information formatted according to a second convergence layer protocol (CL1) and *vice versa.*

3. The network apparatus (NA) according to any of the preceding claims, wherein said controller (CTRL) is adapted to activate a communication channel towards said adapter (A1) according to a master-slave mechanism, said controller (CTRL) being adapted to play a master role.

4. The network apparatus (NA) according to claim 1, wherein said controller (CTRL) is adapted to process said management information according to a third physical layer protocol (PLO'); and
wherein said network apparatus (NA) further comprises a further adapter (A0) installed on said further board (B0), said further adapter (A0) being adapted to perform adaptation between said first physical layer protocol (PL-bus) and said third physical layer protocol (PL0).

5. The network apparatus according to claim 4, wherein said further adapter (A0) is adapted to activate a communication channel towards said adapter (A1) according to a master-slave mechanism, said further adapter (A0) being adapted to play a master role.

6. The network apparatus according to claim 3 or 5, wherein said adapter (A1) is further adapted to use said communication channel for communicating with said controller (CTRL) according to a master-slave mechanism.

7. A method for assembling a network apparatus (NA) for a communication network, said method comprising:
a) providing a plurality of boards, said plurality of boards comprising a board (B1) having a component (C1) adapted to process traffic incoming at said network apparatus (NA);
b) providing a further board (B0) having a controller (CRTL, CTRL') adapted to perform management operations upon said component (C1);
c) providing a bus (Bs) adapted to connect said plurality of boards and said further board (B0), said bus (Bs) being adapted to transport, according to a first physical layer protocol (PL-bus) and to a first data link layer protocol (DLL-bus), management information exchanged between said controller (CTRL) and said component (C1); and
d) providing an adapter (A1) on said board (B1), said adapter (A1) being adapted to performing adaptation between said first physical layer protocol (PL-bus) and a second physical layer protocol (PL1) according to which said component (C1) is adapted to process said management information, wherein said performing adaptation comprises:
d1) processing said management information at a physical layer according to said first physical layer protocol (PL-bus) and according to said second physical layer protocol (PL1);
d2) processing said management information at a data link layer according to said first data link layer protocol (DLL-bus) and according to a second data link layer protocol (DLL1) according to which said component (C1) is adapted to process said management information; and
d3) translating said management information formatted according to any of said first data link layer protocol (DLL-bus) and said second data link layer protocol (DLL1) into management information formatted according to a first convergence layer protocol (CL1) and *vice versa,* wherein said first convergence layer protocol (CL1) is adapted to implement a set of functionalities of a convergence layer intermediate between said data link layer and an application layer.

## Patentansprüche

1. Netzwerkvorrichtung (NA) für ein Kommunikationsnetzwerk, wobei die Netzwerkvorrichtung (NA) umfasst:
a) Eine Vielzahl von Platinen, wobei die besagte Vielzahl von Platinen eine Platine (B1) mit einer Komponente (C1), welche für die Verarbeitung des an der besagten Netzwerkvorrichtung (NA) eingehenden Verkehrs ausgelegt ist, umfasst;
b) eine weitere Platine (B0) mit einem Controller (CTRL, CTRL'), welcher für das Durchführen von Verwaltungsvorgängen auf der besagten Komponente (C1) ausgelegt ist; und
c) einen Bus (Bs), welcher für das Verbinden der besagten Vielzahl von Platinen und der besagten weiteren Platine (B0) ausgelegt ist, wobei der besagte Bus (Bs) dazu ausgelegt ist, zwischen dem besagten Controller (CTRL) und der besagten Komponente (C1) ausgetauschte Verwaltungsinformationen gemäß einem ersten Protokoll der physischen Schicht (PL-bus) und einem ersten Protokoll der Datenverbindungsschicht (DLL-bus) zu transportieren,
**dadurch gekennzeichnet, dass** die besagte Komponente (C1) dazu ausgelegt ist, die besagten Verwaltungsinformationen gemäß einem zweiten Protokoll der physischen Schicht (PL1) und einem zweiten Protokoll der Datenverbindungsschicht (DLL1) zu verarbeiten; und
dass die besagte Netzwerkvorrichtung (NA) weiterhin einen auf der besagten Platine (B1) installierten Adapter (A1) umfasst, wobei der besagte Adapter (A1) für das Durchführen der Anpassung zwischen dem besagten ersten Protokoll der physischen Schicht (PL-bus) und dem besagten zweiten Protokoll der physischen Schicht (PL1) ausgelegt ist, wobei das Durchführen der Anpassung umfasst:
d) Verarbeiten der besagten Verwaltungsinformationen an einer physischen Schicht gemäß dem besagten ersten Protokoll der physischen Schicht (PL-bus) und gemäß dem besagten zweiten Protokoll der physischen Schicht (PL1);
e) Verarbeiten der besagten Verwaltungsinformationen an einer Datenverbindungsschicht gemäß dem besagten ersten Protokoll der Datenverbindungsschicht (DLL-bus) und gemäß dem besagten zweiten Protokoll der Datenverbindungsschicht (DLL1); und
f) Übersetzen der beliebig entweder gemäß dem besagten ersten Protokoll der Datenverbindungsschicht (DLL-bus) oder dem besagten zweiten Protokoll der Datenverbindungsschicht (DLL1) formatierten Verwaltungsinformationen in gemäß einem ersten Protokoll der Konvergenzschicht (CL1) formatierte Verwaltungsinformationen und umgekehrt, wobei das besagte erste Protokoll der Konvergenzschicht (CL1) dazu ausgelegt ist, einen Satz von Funktionalitäten einer zwischen der besagten Datenverbindungsschicht und einer Anwendungsschicht angeordneten Konvergenzschicht zu implementieren.

2. Netzwerkvorrichtung (NA) nach Anspruch 1, wobei:
g) die besagte Komponente (C1) dazu ausgelegt ist, die besagten Verwaltungsinformationen gemäß einem ersten Protokoll der Anwendungsschicht (AL1) zu verarbeiten;
h) der besagte Controller (CTRL) dazu ausgelegt ist, die besagten Verwaltungsinformationen gemäß dem besagten ersten Protokoll der Anwendungsschicht (AL1) zu verarbeiten;
i) der besagte Controller (CTRL) weiterhin dazu ausgelegt ist, die besagten gemäß dem ersten Protokoll der Anwendungsschicht (AL1) formatierten Verwaltungsinformationen in gemäß einem zweiten Protokoll der Konvergenzschicht (CL1) formatierte Verwaltungsinformationen zu übersetzen, und umgekehrt.

3. Netzwerkvorrichtung (NA) nach einem beliebigen der vorstehenden Ansprüche, wobei der besagte Controller (CTRL) dazu ausgelegt ist, einen Kommunikationskanal zu dem besagten Adapter (A1) gemäß einem Master-Slave-Mechanismus zu aktivieren, wobei der besagte Controller (CTRL) für das Ausüben einer Master-Rolle ausgelegt ist.

4. Netzwerkvorrichtung (NA) nach Anspruch 1, wobei der besagte Controller (CTRL) dazu ausgelegt ist, die besagten Verwaltungsinformationen gemäß einem dritten Protokoll der physischen Schicht (PL0') zu verarbeiten; und
wobei die besagte Netzwerkvorrichtung (NA) weiterhin einen weiteren auf der besagten weiteren Platine (B0) installierten Adapter (A0) umfasst, wobei der besagte weitere Adapter (A0) dazu ausgelegt ist, die Anpassung zwischen dem besagten ersten Protokoll der physischen Schicht (PL-bus) und dem besagten dritten Protokoll der physischen Schicht (PL0) durchzuführen.

5. Netzwerkvorrichtung nach Anspruch 4, wobei der besagte weitere Adapter (A0) dazu ausgelegt ist, einen Kommunikationskanal zu dem besagten Adapter (A1) gemäß einem Master-Slave-Mechanismus zu aktivieren, wobei der besagte weitere Adapter (A0) für das Ausüben einer Master-Rolle ausgelegt ist.

6. Netzwerkvorrichtung nach Anspruch 3 oder 5, wobei der besagte Adapter (A1) weiterhin dazu ausgelegt ist, den besagten Kommunikationskanal zum Kommunizieren mit dem besagten Controller (CTRL) gemäß einem Master-Slave-Mechanismus zu benutzen.

7. Verfahren zur Montage einer Netzwerkvorrichtung (NA) für ein Kommunikationsnetzwerk, wobei das besagte Verfahren umfasst:
a) Bereitstellen einer Vielzahl von Platinen, wobei die besagte Vielzahl von Platinen eine Platine (B1) mit einer Komponente (C1), welche für die Verarbeitung des an der besagten Netzwerkvorrichtung (NA) eingehenden Verkehrs ausgelegt ist, umfasst;
b) Bereitstellen einer weiteren Platine (B0) mit einem Controller (CTRL, CTRL') welcher für das Durchführen von Verwaltungsvorgängen auf der besagten Komponente (C1) ausgelegt ist;
c) Bereitstellen eines Busses (Bs), welcher für das Verbinden der besagten Vielzahl von Platinen und der besagten weiteren Platine (B0) ausgelegt ist, wobei der besagte Bus (Bs) dazu ausgelegt ist, zwischen dem besagten Controller (CTRL) und der besagten Komponente (C1) ausgetauschte Verwaltungsinformationen gemäß einem ersten Protokoll der physischen Schicht (PL-bus) und einem ersten Protokoll der Datenverbindungsschicht (DLL-bus) zu transportieren; und
d) Bereitstellen eines Adapters (A1) auf der besagten Platine (B1), wobei der besagte Adapter (A1) dazu ausgelegt ist, die Anpassung zwischen dem besagten ersten Protokoll der physischen Schicht (PL-bus) und einem zweiten Protokoll der physischen Schicht (PL1), gemäß welchem die besagte Komponente (C1) fähig ist, die besagten Verwaltungsinformationen zu verarbeiten, durchzuführen, wobei das besagte Durchführen der Anpassung umfasst:
d1) Verarbeiten der besagten Verwaltungsinformationen an einer physischen Schicht gemäß dem besagten ersten Protokoll der physischen Schicht (PL-bus) und gemäß dem besagten zweiten Protokoll der physischen Schicht (PL1);
d2) Verarbeiten der besagten Verwaltungsinformationen an einer Datenverbindungsschicht gemäß dem besagten ersten Protokoll der Datenverbindungsschicht (DLL-bus) und gemäß einem zweiten Protokoll der Datenverbindungsschicht (DLL1, gemäß welchem die besagte Komponente (C1) fähig ist, die besagten Verwaltungsinformationen zu verarbeiten; und
d3) Übersetzen der beliebig entweder gemäß dem ersten Protokoll der Datenverbindungsschicht (DLL-bus) oder dem besagten zweiten Protokoll der Datenverbindungsschicht (DLL1) formatierten Verwaltungsinformationen in gemäß einem ersten Protokoll der Konvergenzschicht (CL1) formatierte Verwaltungsinformationen und umgekehrt, wobei das besagte erste Protokoll der Konvergenzschicht (CL1) dazu ausgelegt ist, einen Satz von Funktionalitäten einer zwischen der besagten Datenverbindungsschicht und einer Anwendungsschicht angeordneten Konvergenzschicht zu implementieren.

## Revendications

1. Appareil de réseau (NA) pour un réseau de communication, l'appareil de réseau (NA) comprenant :
a) une pluralité de cartes, ladite pluralité de cartes comprenant une carte (B1) présentant un composant (C1) adapté pour traiter le trafic entrant au niveau dudit appareil de réseau (NA) ;
b) une autre carte (B0) présentant un dispositif de commande (CTRL, CTRL') adapté pour exécuter des opérations de gestion sur ledit composant (C1) ; et
c) un bus (Bs) adapté pour connecter ladite pluralité de cartes et ladite autre carte (B0), ledit bus (Bs) étant adapté pour transporter, conformément à un premier protocole de couche physique (PL-bus) et à un premier protocole de couche de liaison de données (DLL-bus), des informations de gestion échangées entre ledit dispositif de commande (CTRL) et ledit composant (C1),
**caractérisé en ce que** ledit composant (C1) est adapté pour traiter lesdites informations de gestion conformément à un deuxième protocole de couche physique (PL1) et à un deuxième protocole de couche de liaison de données (DLL1) ; et
**en ce que** ledit appareil de réseau (NA) comprend en outre un adaptateur (A1) installé sur ladite carte (B1), ledit adaptateur (A1) étant adapté pour réaliser une adaptation entre ledit premier protocole de couche physique (PL-bus) et ledit deuxième protocole de couche physique (PL1), ladite réalisation de l'adaptation comprenant les étapes suivantes :
d) traiter lesdites informations de gestion au niveau d'une couche physique conformément audit premier protocole de couche physique (PL-bus) et conformément audit deuxième protocole de couche physique (PL1) ;
e) traiter lesdites informations de gestion au niveau d'une couche de liaison de données conformément audit premier protocole de couche de liaison de données (PL-bus) et conformément audit deuxième protocole de couche de liaison de données (PL1) ;
f) traduire lesdites informations de gestion formatées conformément à l'un quelconque parmi ledit premier protocole de couche de liaison de données (DLL-bus) et ledit deuxième protocole de couche de liaison de données (DLL1) en informations de gestion formatées conformément à un premier protocole de couche de convergence (CL1) et inversement, dans lequel ledit premier protocole de couche de convergence (CL1) est adapté pour mettre en oeuvre un ensemble de fonctionnalités d'une couche de convergence entre ladite couche de liaison de données et une couche d'application.

2. Appareil de réseau (NA) selon la revendication 1, dans lequel :
g) ledit composant (C1) est adapté pour traiter lesdites informations de gestion conformément à un premier protocole de couche d'application (AL1) ;
h) ledit dispositif de commande (CTRL) est adapté pour traiter lesdites informations de gestion conformément audit premier protocole de couche d'application (AU) ;
i) ledit dispositif de commande (CTRL) est en outre adapté pour traduire lesdites informations de gestion formatées conformément audit premier protocole de couche d'application (AL1) en informations de gestion formatées conformément à un deuxième protocole de couche de convergence (CL1) et inversement.

3. Appareil de réseau (NA) selon l'une quelconque des revendications précédentes, dans lequel ledit dispositif de commande (CTRL) est adapté pour activer une voie de communication vers ledit adaptateur (A1) conformément à un mécanisme maître/esclave, ledit dispositif de commande (CTRL) étant adapté pour jouer un rôle de maître.

4. Appareil de réseau (NA) selon la revendication 1, dans lequel ledit dispositif de commande (CTRL) est adapté pour traiter lesdites informations de gestion conformément à un troisième protocole de couche physique (PLO') ; et
dans lequel ledit appareil de réseau (NA) comprend en outre un autre adaptateur (A0) installé sur ladite autre carte (B0), ledit autre adaptateur (A0) étant adapté pour réaliser une adaptation entre ledit premier protocole de couche physique (PL-bus) et ledit troisième protocole de couche physique (PL0).

5. Appareil de réseau selon la revendication 4, dans lequel ledit autre adaptateur (A0) est adapté pour activer une voie de communication vers ledit adaptateur (A1) conformément à un mécanisme maître/esclave, ledit autre adaptateur (A0) étant adapté pour jouer un rôle de maître.

6. Appareil de réseau selon la revendication 3 ou 5, dans lequel ledit adaptateur (A1) est en outre adapté pour utiliser ladite voie de communication pour communiquer avec ledit dispositif de commande (CTRL) conformément à un mécanisme maître/esclave.

7. Procédé pour assembler un appareil de réseau (NA) pour un réseau de communication, ledit procédé comprenant les étapes suivantes :
a) fournir une pluralité de cartes, ladite pluralité de cartes comprenant une carte (B1) présentant un composant (C1) adapté pour traiter le trafic entrant au niveau dudit appareil de réseau (NA) ;
b) fournir une autre carte (B0) présentant un dispositif de commande (CTRL, CTRL') adapté pour exécuter des opérations de gestion sur ledit composant (C1) ; et
c) fournir un bus (Bs) adapté pour connecter ladite pluralité de cartes et ladite autre carte (B0), ledit bus (Bs) étant adapté pour transporter, conformément à un premier protocole de couche physique (PL-bus) et à un premier protocole de couche de liaison de données (DLL-bus), des informations de gestion échangées entre ledit dispositif de commande (CTRL) et ledit composant (C1) ; et
d) fournir un adaptateur (A1) sur ladite carte (B1), ledit adaptateur (A1) étant adapté pour réaliser une adaptation entre ledit premier protocole de couche physique (PL-bus) et un deuxième protocole de couche physique (PL1) auxquels ledit composant (C1) est adapté pour traiter lesdites informations de gestion, dans lequel ladite réalisation de l'adaptation comprend les étapes suivantes :
d1) traiter lesdites informations de gestion au niveau d'une couche physique conformément audit premier protocole de couche physique (PL-bus) et conformément audit deuxième protocole de couche physique (PL1) ;
d2) traiter lesdites informations de gestion au niveau d'une couche de liaison de données conformément audit premier protocole de couche de liaison de données (DLL-bus) et conformément à un deuxième protocole de couche de liaison de données (DLL1) auxquels ledit composant (C1) est adapté pour traiter lesdites informations de gestion ; et
d3) traduire lesdites informations de gestion formatées conformément à l'un quelconque parmi ledit premier protocole de couche de liaison de données (DLL-bus) et ledit deuxième protocole de couche de liaison de données (DLL1) en informations de gestion formatées conformément à un premier protocole de couche de convergence (CL1) et inversement, dans lequel ledit premier protocole de couche de convergence (CL1) est adapté pour mettre en oeuvre un ensemble de fonctionnalités d'une couche de convergence entre ladite couche de liaison de données et une couche d'application.
